# EUROPEAN PATENT SPECIFICATION

(11) **EP 2 011 708 B1**
(45) Date of publication and mention of the grant of the patent: **10.03.2010**
(21) Application number: 07425414.5
(22) Date of filing: 05.07.2007
(51) Int. Cl.: B60W 10/10, B60W 10/02, B60W 10/18, B60W 30/18, F16D 48/06, F16H 61/28

(54) **Method for controlling a vehicle equipped with a mechanical servo transmission**
Verfahren zur Steuerung eines mit einer mechanischen Servogetriebe ausgerüsteten Fahrzeugs
Procédé pour la commande d'un véhicule équipé d'une transmission mécanique servo-assistée

(43) Date of publication of application: 07.01.2009
(73) Proprietor: Magneti Marelli S.p.A., Corbetta (MI) (IT)
(72) Inventor: Amisano, Fabrizio, 10144 Torino (IT); Sola, Cesare, 10087 Valperga (IT)
(74) Representative: Cerbaro, Elena

(56) References cited:
- EP-A- 0 856 677
- EP-A- 1 201 955
- WO-A-98/28162
- FR-A- 2 751 388
- US-A- 5 632 706

## Description

### TECHNICAL FIELD

The present invention relates to a method for controlling a vehicle equipped with a mechanical servo transmission.

### BACKGROUND ART

There is an ever-increasing diffusion of mechanical servo transmissions, which are structurally similar to a manual transmission of a traditional type except for the fact that the clutch pedal and the gear lever operated by the driver are replaced by corresponding electrical or hydraulic servo controls.

Using a mechanical servo transmission, the driver merely has to issue (for example, using two levers arranged on the opposite sides of the steering column) to a transmission control unit an order to switch to a higher gear or else to a lower gear, and the transmission control unit carries out autonomously gear change by acting both on the engine and on the servo controls associated to clutch and gearchange.

Normally, a mechanical servo transmission comprises, respectively, three hydraulic actuators, which actuate engagement/disengagement of the clutch, engagement/disengagement of the gears, and gear selection, and three position sensors, which are associated to the three hydraulic actuators for detecting the position of the clutch, the position of the engagement/disengagement of the gears, and the position of selection of the gears. The transmission control unit uses the signals supplied by the position sensors for feedback control of the hydraulic actuators.

The inevitable constructional tolerances of the mechanical components of the transmission, of the hydraulic actuators and of the position sensors render necessary an adequate initial calibration of the mechanical servo transmission in such a way as to enable the transmission control unit to store the effective clutch transmissibility function (i.e., the biunique function that associates to each position of the clutch a respective value of torque transmitted by the clutch between the engine shaft and the primary shaft of the gearchange) and the effective positions of engagement of the gears and selection of the gears.

Currently, the initial calibration of the mechanical servo transmission of a vehicle requires that, as soon as the vehicle leaves the production line, a skilled operator should connect a computer, with which he is equipped, to the transmission control unit of the vehicle so as to get the transmission control unit itself to carry out the operations of calibration. Consequently, the initial calibration of the mechanical servo transmission of a vehicle is an operation that is long, laborious and entails the intervention of a skilled technician.

### DISCLOSURE OF INVENTION

The aim of the present invention is to provide a method for controlling a vehicle equipped with a mechanical servo transmission, said control method being free from the drawbacks described above and, in particular, being easy and inexpensive to implement.

Provided according to the present invention is a method for controlling a vehicle equipped with a mechanical servo transmission according to what is recited in the accompanying claims.

### BRIEF DESCRIPTION OF THE DRAWINGS

The present invention will now be described with reference to the annexed drawings, which illustrate a non-limiting example of embodiment thereof, wherein:
- Figure 1 is a schematic plan view of a vehicle equipped with a mechanical servo transmission and implementing the control method forming the subject of the present invention; and
- Figure 2 is a schematic view of the mechanical servo transmission of Figure 1.

### PREFERRED EMBODIMENTS OF THE INVENTION

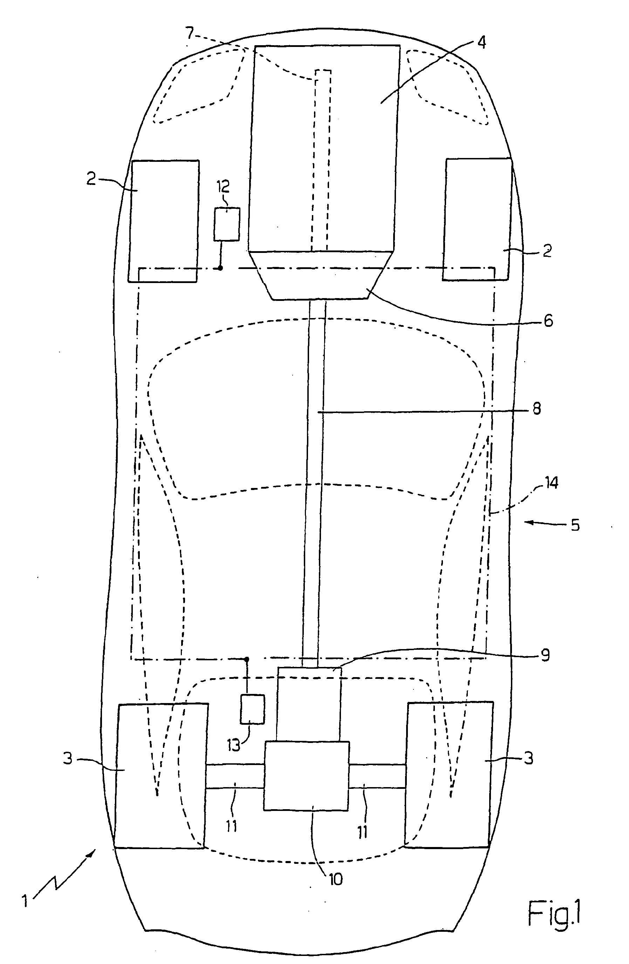

In Figure 1, the reference number 1 designates as a whole an automobile provided with two front wheels 2 and two rear driving wheels 3, which receive the torque generated by an internal-combustion engine 4 by means of a servo transmission 5. The servo transmission 5 comprises a servo clutch 6, which is housed in a bell fixed with respect to the engine 4 and is designed to connect a drive shaft 7 of the engine 4 to a transmission shaft 8 terminating in a servo gearchange 9 arranged on the rear axle. Connected in cascaded fashion to the servo gearchange 9 is a self-blocking differential 10, departing from which a pair of axle shafts 11, each of which is fixed with respect to a respective rear driving wheel 3.

The automobile 1 comprises an engine control unit 12 (illustrated schematically), a transmission control unit 13 (illustrated schematically), and a line 14 BUS, which implements the CAN (Car Area Network) protocol and extends to the entire automobile 1. Both the engine control unit 12 and the transmission control unit 13 are connected to the line 14 BUS and can hence communicate with one another by means of messages sent on the line 14 BUS itself.

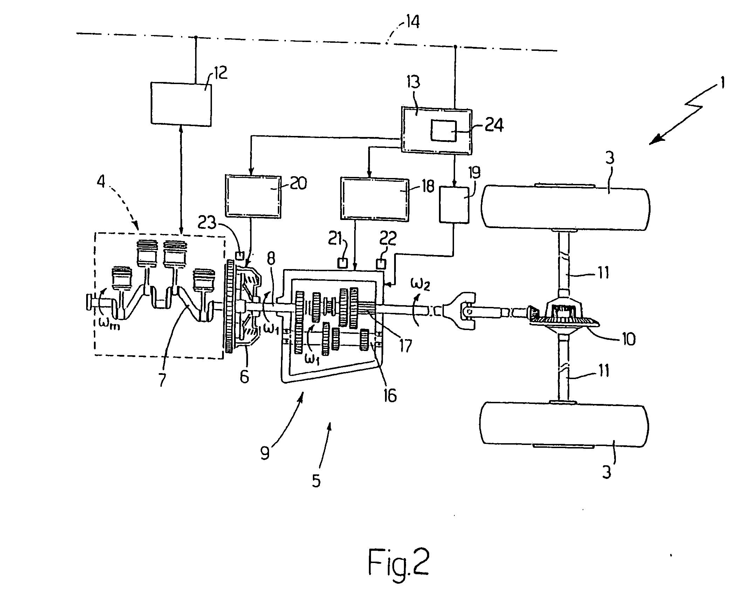

According to what is illustrated in Figure 2, the servo gearchange 9 comprises a primary shaft 16, which turns at an angular velocity ω₁, and a secondary shaft 17, which turns at an angular velocity ω₂ and transmits motion to the rear driving wheels 3 by means of the differential 10 and the pair of axle shafts 11. The servo gearchange 9 is actuated by a servo control 18 for engaging/disengaging a gear and by a servo control 19 for selecting a gear; the servo control 18 and the servo control 19 can be of an electrical type or of a hydraulic type and are driven by the control unit 13 of the transmission 5.

By means of interposition of the servo clutch 6, the primary shaft 16 is connected to the drive shaft 7, which is driven in rotation by the engine 4 and turns at an angular velocity ωₘ. The servo clutch 6 is actuated by a servo control 20, which is preferably of a hydraulic type and is driven by the control unit 13 of the transmission 5.

In the case of manual control of the servo transmission 5, the driver of the automobile 1 sends, in a known way, to the transmission control unit 13 the request to perform a gear change. During a gear change from a current gear to a subsequent gear, the control unit 13 issues a command for execution in sequence of a series of operations, each of which must be completed before it is possible to complete the next operation. In particular, the series of operations to be performed to carry out a gear change from a current gear to a subsequent gear comprises:
- cutting off the torque supplied by the engine 4 in order to prevent a sharp and uncontrolled increase in the angular velocity ωₘ of the drive shaft 7;
- disengaging the servo clutch 6 by driving the servo control 20;
- disengaging the current gear by driving the servo control 18;
- selecting the subsequent gear by driving the servo control 19;
- engaging the subsequent gear by driving the servo control 18;
- engaging the servo clutch 6 by driving the servo control 20; and
- restoring the torque supplied by the engine 4.

When the car starts from a stationary condition, i.e., a condition where the servo gearchange 9 is in neutral, the servo clutch 6 is typically disengaged, and the engine 4 is idling, some of the operations described above are no longer necessary and in particular it is not necessary to cut off the torque supplied by the engine 4, disengaging the servo clutch 6 and disengaging the current gear.

The servo controls 18, 19 and 20 are driven directly by the transmission control unit 13. Instead, the variations of the torque supplied by the engine 4 are performed by the control unit 12 of the engine 4 following upon a specific request from the transmission control unit 13 forwarded by means of the line 14 BUS.

According to what is illustrated in Figure 2, associated to the servo gearchange 9 are two position sensors 21 and 22 for determining, respectively, the position of engagement/disengagement and the position of selection of the servo gearchange 9. Furthermore, associated to the servo clutch 6 is a position sensor 23 for determining the position of the servo clutch 6. The position sensors 21, 22 and 23 are connected directly to the transmission control unit 13, which uses the signals supplied by the position sensors 21, 22 and 23 for feedback control of the servo controls 18, 19 and 20.

Furthermore, the transmission control unit 13 comprises a calibration memory 24 designed to store a function of transmissibility of the servo clutch 6 and the effective positions of engagement and selection of the gears in the servo gearchange 9.

The function of transmissibility of the servo clutch 6 is a biunique function that associates to each position of the servo clutch 6 a respective value of torque transmitted by the servo clutch 6 between the drive shaft 7 and the primary shaft 16 of the servo gearchange 9. The function of transmissibility of the servo clutch 6 has two limit points: a point of start of engagement in which the servo clutch 6 starts to transmit a torque (i.e., upstream of the point of start of engagement, the servo clutch 6 does not transmit any torque irrespective of its position) and an engagement point, in which the servo clutch 6 starts to be completely engaged (i.e., downstream of the point of engagement, the servo clutch 6 transmits a constant torque irrespective of its position). Between the point of start of engagement and the engagement point, the function of transmissibility of the clutch 6 follows an increasing pattern with a tendentially parabolic shape.

The effective positions of engagement and selection of the gears in the servo gearchange 9 indicate the readings made by the position sensors 21 and 22 of the positions in which the engagement/disengagement of the gears and selection of the gears take place.

The transmission control unit 13 uses the information stored in the calibration memory 24 for controlling the servo controls 18, 19 and 20 so as to take into account the inevitable tolerances of production of the mechanical components of the servo transmission 5, of the hydraulic actuators 18, 19 and 20, and of the position sensors 21, 22 and 23.

Upon starting of the internal-combustion engine 4, the transmission control unit 13 verifies whether the calibration memory 24 contains the function of transmissibility of the servo clutch 6 and/or the effective positions of engagement and selection of the gears in the servo gearchange 9; if the calibration memory 24 does not contain the function of transmissibility of the servo clutch 6 and/or the effective positions of engagement and selection of the gears in the servo gearchange 9, then the transmission control unit 13 determines that this is the very first starting of the internal-combustion engine 4 (or the first starting of the internal-combustion engine 4 after replacement of part of the servo transmission 5) and starts a self-calibration process comprising a first self-calibration step and a subsequent second self-calibration step.

Preliminarily, the transmission control unit 13 checks that no errors are present, i.e., that all the sensors 21-23 and all the solenoid valves are present and properly connected; once it has verified that no errors are present, the transmission control unit 13 can start issuing commands to the servo controls 18-20.

Initially, the transmission control unit 13 sends a signal to the driver from start of the first self-calibration step, during which the driver must leave the internal-combustion engine 4 turned on and the automobile 1 stationary. Then, the transmission control unit 13 selects and engages a number of times all the gears of the servo gearchange 9 using the servo controls 18 and 19 and autonomously from the driver in order to determine the effective positions of engagement and selection of the gears in the servo gearchange 9.

Once the effective positions of engagement and selection of the gears in the servo gearchange 9 have been determined with sufficient accuracy and repeatability, the transmission control unit 13 disengages and engages the servo clutch 6 with the servo gearchange 9 in neutral using the servo control 20 and autonomously from the driver in order to determine the point of start of engagement of the servo clutch 6.

Once the point of start of engagement of the servo clutch 6 has been determined, the transmission control unit 13 sends to the driver a signal for end of the first self-calibration step and then a signal of start of the second self-calibration step, during which the driver must drive the automobile 1 along a test run that envisages a series of starts from a stationary condition; the test run may be a testing track or else a roller test bench.

According to a preferred embodiment, at the end of the first self-calibration step, the transmission control unit 13 compares the function of transmissibility of the servo clutch 6 and/or the effective positions of engagement and selection of the gears in the servo gearchange 9 with corresponding expected mean comparison values stored in the design stage to verify that the values determined during the first self-calibration step are not too different from the expected mean comparison values. If the values determined during the first self-calibration step are too different from the expected mean comparison values, then the transmission control unit 13 interrupts the self-calibration process and signals a possible mechanical error.

During the second self-calibration step, the transmission control unit 13 determines, at each gear change, the point of start of engagement of the servo clutch 6 and the point of engagement of the servo clutch 6 and, during starting from a stationary condition, estimates the behaviour of the function of transmissibility of the servo clutch 6 between the point of start of engagement and the engagement point. Once the function of transmissibility of the servo clutch 6 has been determined with sufficient accuracy and repeatability, the transmission control unit 13 sends to the driver a signal of end of the second self-calibration step and terminates the self-calibration procedure.

According to a preferred embodiment, at the start of the first self-calibration step the transmission control unit 13 actuates the servo controls 18, 19 and 20 a certain number of times before determining the function of transmissibility of the servo clutch 6 and/or the effective positions of engagement and selection of the gears in the servo gearchange 9; the purpose of prior actuation of the servo controls 18, 19 and 20 is to enable the mechanics of the servo transmission 5 and of the servo controls 18, 19 and 20 to settle before proceeding with the measurements.

Preferably, during the first self-calibration step the automobile 1 is kept braked autonomously from the driver using (if present) a servo parking brake actuated by a servo control of its own, or else using a braking system of the automobile 1. Alternatively, it might required of the driver to keep brake pedal pressed down during the first self-calibration step.

According to a preferred embodiment, the transmission control unit 13 sends the signals to the driver by controlling an instrumentation of the automobile 1 set on a dashboard of the automobile 1 itself (for example, by sending a text message on a display or else by lighting up a particular combination of warning lights) .

In order to take into account the mechanical wear and drift over time of the components of the servo transmission 5, the transmission control unit 13 cyclically updates during the life of the automobile 1 the function of transmissibility of the servo clutch 6 and/or the effective positions of engagement and selection of the gears in the servo gearchange 9. An example of modality for updating the function of transmissibility of the servo clutch 6 is provided in the applications of patent EP0856677 and EP1201955.

The control method described above (implemented in the transmission control unit 13) presents numerous advantages, in so far as it is simple and inexpensive to implement in a vehicle equipped with the servo transmission 5 and above all renders the initial calibrations of the servo transmission 5 extremely simple and intuitive. In practice, it is sufficient that, once the automobile 1 has left the production line, a tester should start the engine 4 of the automobile 1 and, after a certain time interval signalled through the instrument panel of the automobile 1, should carry out a pre-defined test run (along a real circuit or using a roller test bench).

## Claims

1. A method for controlling a vehicle (1), said vehicle (1) comprising:
an internal-combustion engine (4) provided with a drive shaft (7) ;
a mechanical servo gearchange (9), actuated by at least one first servo control (18, 19);
a servo clutch (6), actuated by at least one second servo control (20) and set between the drive shaft (6) and a primary shaft (16) of the gearchange (9) for connecting and
disconnecting the drive shaft (7) to/from the primary shaft (16) of the gearchange (9);
at least one first position sensor (21, 22) for detecting the position of the gearchange (9);
at least one second position sensor (23) for detecting the position of the clutch (6);
a control unit (13) for controlling transmission, provided with a memory (24) of calibrations, designed to store a function of transmissibility of the clutch (6) and the effective positions of engagement and selection of the gears in the gearchange (9);
the control method is **characterized in that** it comprises the steps of:
verifying, at starting of the internal-combustion engine (4), whether the memory (24) of calibrations contains the function of transmissibility of the clutch (6) and/or the effective positions of engagement and selection of the gears in the gearchange (9);
sending to the driver, if the memory (24) of calibrations does not contain the function of transmissibility of the clutch (6) and/or the effective positions of engagement and selection of the gears in the gearchange (9), a signal of start of a first self-calibration step, during which the driver must leave the internal-combustion engine (4) turned on and the vehicle (1) stationary;
selecting and engaging a number of times, during the first self-calibration step, all the gears of the gearchange (9) using the first servo control (18, 19) and autonomously from the driver for determining the effective positions of engagement and selection of the gears in the gearchange (9);
disengaging and engaging, during the first self-calibration step, the clutch (6) with the gearchange (9) in neutral using the second servo control (20) and autonomously from the driver for determining a point of start of engagement of the clutch (6); and
sending to the driver, at the end of the first self-calibration step, a signal of end of the first self-calibration step.

2. The control method according to Claim 1 and comprising the further steps of:
sending to the driver, at the end of the first self-calibration step, a signal of start of a second self-calibration step, during which the driver must drive the vehicle (1) along a test run that envisages a series of starts from the stationary condition;
determining, during the second self-calibration step, the point of start of engagement of the clutch (6) and a point of engagement of the clutch (6); and
sending to the driver, at the end of the second self-calibration step, a signal of end of the second self-calibration step.

3. The control method according to Claim 2, wherein during starting from a stationary condition of the second self-calibration step is estimated the behaviour of the function of transmissibility of the clutch (6) between the point of start of engagement and the point of engagement.

4. The control method according to Claim 1, or Claim 2, or Claim 3 and comprising the further step of actuating, during the first self-calibration step, the servo controls (18, 19, 20) a certain number of times before determining the function of transmissibility of the clutch (6) and/or the effective positions of engagement and selection of the gears in the gearchange (9).

5. The control method according to any one of Claims 1 to 4, wherein, during the first self-calibration step, the vehicle (1) is kept braked.

6. The control method according to Claim 5, wherein the vehicle (1) comprises a servo parking brake, actuated by at least one third servo control; during the first self-calibration step, the vehicle (1) is kept braked by actuating the servo parking brake autonomously from the driver.

7. The control method according to Claim 5, wherein the vehicle (1) is kept braked by actuating a braking system of the vehicle (1) autonomously from the driver.

8. The control method according to any one of Claims 1 to 7, wherein the signals are sent to the driver, driving an instrumentation of the vehicle (1) set on a dashboard of the vehicle (1) itself.

9. The control method according to any one of Claims 1 to 8 and comprising the further step of updating cyclically, during the life of the vehicle (1), the function of transmissibility of the clutch (6) and/or the effective positions of engagement and selection of the gears in the gearchange (9).

10. The control method according to any one of Claims 1 to 8 and comprising the further steps of:
storing the expected mean comparison values for the function of transmissibility of the clutch (6) and/or the effective positions of engagement and selection of the gears in the gearchange (9); and
comparing the function of transmissibility of the clutch (6) and/or the effective positions of engagement and selection of the gears in the gearchange (9) determined during the first self-calibration step with the corresponding expected mean comparison values for verifying whether the difference between the function of transmissibility of the clutch (6) and/or the effective positions of engagement and selection of the gears in the gearchange (9) determined during the first self-calibration step are not too different from the expected mean comparison values.

## Patentansprüche

1. Verfahren zum Steuern eines Fahrzeugs (1), wobei das Fahrzeug (1) umfasst:
einen Verbrennungsmotor (4), der mit einer Antriebswelle (7) versehen ist;
eine mechanische Servo- Gangschaltung (9), die durch wenigstens eine erste Servosteuerung (18, 19) betätigt wird;
eine Servokupplung (6), die durch wenigstens eine zweite Servosteuerung (20) betätigt wird und zwischen der Antriebswelle (6) und einer Primärwelle (16) der Gangschaltung (9) eingesetzt ist, um die Antriebswelle (7) mit der Primärwelle (16) der Gangschaltung (9) zu verbinden oder zu trennen;
wenigstens einen ersten Positionssensor (21, 22) zum Erfassen der Position der Gangschaltung (9);
wenigstens einen zweiten Positionssensor (23) zum Erfassen der Position der Kupplung (6); eine Steuereinheit (13) zum Steuern einer Transmission, die mit einem Speicher (24) für Kalibrierungen versehen ist, der so ausgewählt ist, dass dieser eine Funktion der Transmissionsfähigkeit der Kupplung (6) und der effektiven Eingriffspositionen und der Auswahl der Gänge in der Gangschaltung (9) speichert;
wobei das Steuerverfahren **dadurch gekennzeichnet ist, dass** dieses die Schritte umfasst:
Verifizieren, beim Starten des Verbrennungsmotors (4), ob der Speicher (24) der Kalibrierungen die Funktion der Transmissionsfähigkeit der Kupplung (6) und/oder der effektiven Eingriffspositionen und der Auswahl der Gänge in der Gangschaltung (9) enthält;
Senden an den Fahrer, falls der Speicher (24) für die Kalibrierungen die Funktion der Transmissionsfähigkeit der Kupplung (6) und/oder der effektiven Eingriffspositionen und der Auswahl der Gänge in der Gangschaltung (9) nicht enthält, eines Startsignals eines ersten Selbstkalibrierungsschritts, während dessen der Fahrer den Verbrennungsmotor (4) eingeschaltet und das Fahrzeug (1) im Stand belassen muss;
mehrmaliges Auswählen und in Eingriff bringen während des ersten Selbstkalibrierungsschritts aller Gänge der Gangschaltung (9) unter Verwendung der ersten Servosteuerung (18, 19) und unabhängig von dem Fahrer, um die effektiven Positionen des Eingriffs und der Auswahl der Gänge in der Gangschaltung (9) zu bestimmen;
Trennen und in Eingriff bringen, während des ersten Selbstkalibrierungsschritts, der Kupplung (6) mit der Gangschaltung (9) im Lehrlauf unter Verwendung der zweiten Servosteuerung (20) und unabhängig von dem Fahrer, um den Startpunkt des Eingriffs der Kupplung (6) zu bestimmen; und
Senden an den Fahrer, am Ende des ersten Selbstkalibrierungsschritts, eines Signals der Beendigung des ersten Selbstkalibrierungsschritts.

2. Steuerverfahren nach Anspruch 1 und mit den weiteren Schritten:
Senden an den Fahrer, am Ende des ersten Selbstkalibrierungsschritts, ein Startsignal an das zweite Selbstkalibrierungsschritts, während dessen der Fahrer das Fahrzeug (1) in einem Testlauf steuern muss, der eine Reihe von Starts von dem Standzustand aus einbezieht;
Bestimmen, während des zweiten Selbstkalibrierungsschritts, den Startpunkt des Eingriffs der Kupplung (6) und einen Eingriffspunkt der Kupplung (6); und
Senden an den Fahrer, am Ende des zweiten Selbstkalibrierungsschritts, ein Signal der Beendigung des zweiten Selbstkalibrierungsschritts.

3. Steuerverfahren nach Anspruch 2, in welchem während des Startens aus einem Standzustand des zweiten Selbstkalibrierungsschritts das Verhalten der Funktion der Transmissionsfähigkeit der Kupplung (6) zwischen dem Startpunkt des Eingriffs und dem Eingriffspunkt geschätzt wird.

4. Steuerverfahren nach Anspruch 1 oder Anspruch 2 oder Anspruch 3 und mit dem weiteren Schritt des Betätigens, während des ersten Kalibrierungsschritts, der Servosteuerungen (18, 19, 20) in einer bestimmten Mehrmaligkeit vor dem Bestimmen der Funktion der Transmissionsfähigkeit der Kupplung (6) und/oder der effektiven Eingriffspositionen und der Auswahl der Gänge in der Gangschaltung (9).

5. Steuerverfahren nach einem der Ansprüche 1 bis 4, in welchem während des ersten Selbstkalibrierungsschritts das Fahrzeug (1) gebremst gehalten wird.

6. Steuerverfahren nach Anspruch 5, in welchem das Fahrzeug (1) eine Servo- Parkbremse umfasst, die durch wenigstens eine Dritte Servosteuerung betätigt wird;
während des ersten Selbstkalibrierungsschritts wird das Fahrzeug (1) durch Betätigen der Servo- Parkbremse unabhängig vom Fahrer gebremst gehalten.

7. Steuerverfahren nach Anspruch 5, in welchem das Fahrzeug (1) durch Betätigen eines Bremssystems des Fahrzeugs (1) unabhängig vom Fahrer gebremst gehalten wird.

8. Steuerverfahren nach einem der Ansprüche 1 bis 7, in welchem die Signale an den Fahrer gesendet werden, in dem eine Instrumentenanzeige des Fahrzeugs (1), die auf einem Armaturenbrett des Fahrzeugs (1) selbst angebracht ist, gesteuert wird.

9. Steuerverfahren nach einem der Ansprüche 1 bis 8 und mit dem weiteren Schritt eines zyklischen Aktualisierens während der Lebensdauer des Fahrzeug (1) der Funktion der Transmissionsfähigkeit der Kupplung (6) und/oder der effektiven Eingriffspositionen und der Auswahl der Gänge in der Gangschaltung (9).

10. Steuerverfahren nach einem der Ansprüche 1 bis 8 und mit den weiteren Schritten:
Speichern der erwarteten Vergleichsmittelwerte für die Funktion der Transmissionsfähigkeit der Kupplung (6) und/oder der effektiven Eingriffspositionen und der Auswahl der Gänge in der Gangschaltung (9); und
Vergleichen der Funktion der Transmissionsfähigkeit der Kupplung (6) und/oder der effektiven Eingriffspositionen und der Auswahl der Gänge in der Gangschaltung (9), die während des ersten Selbstkalibrierungsschritts bestimmt wurden, mit den korrespondierenden erwarteten Vergleichsmittelwerten, um zu differenzieren, ob die Differenz zwischen der Funktion der Transmissionsfähigkeit der Kupplung (6) und/oder effektiven Eingriffspositionen und die Auswahl der Gänge in der Gangschaltung (9), die während des ersten Kalibrierungsschritts bestimmt wurden, nicht zu weit von den erwarteten Vergleichsmittelwerten abweichen.

## Revendications

1. Procédé de commande d'un véhicule (1), ledit véhicule (1) comprenant :
un moteur à combustion interne (4) muni d'un arbre de transmission (7) ;
une boîte de vitesse mécanique à servocommande (9), actionnée par au moins une première servocommande (18, 19) ;
un embrayage à servocommande (6), actionné par au moins une deuxième servocommande (20) et placé entre l'arbre de transmission (7) et un arbre primaire (16) de la boîte de vitesse (9), pour relier l'arbre de transmission (7) à l'arbre primaire (16) de la boîte de vitesse (9) et le désolidariser de celui-ci ;
au moins un premier capteur de position (21, 22) pour détecter la position de la boîte de vitesse (9) ;
au moins un deuxième capteur de position (23) pour détecter la position de l'embrayage (6) ;
une unité de commande (13) pour commander la transmission, munie d'une mémoire (24) des étalonnages, conçue pour stocker une fonction de transmissibilité de l'embrayage (6) et les positions réelles d'accouplement et de sélection des engrenages dans la boîte de vitesse (9) ;
le procédé de commande est **caractérisé en ce qu'**il comprend les étapes consistant à :
vérifier, au démarrage du moteur à combustion interne (4), si la mémoire (24) des étalonnages contient la fonction de transmissibilité de l'embrayage (6) et/ou les positions réelles d'accouplement et de sélection des engrenages dans la boîte de vitesse (9) ;
si la mémoire (24) des étalonnages ne contient pas la fonction de transmissibilité de l'embrayage (6) et/ou les positions réelles d'accouplement et de sélection de engrenages dans la boîte de vitesse (9), transmettre au conducteur un signal de démarrage d'une première étape d'auto-étalonnage, durant laquelle le conducteur doit laisser le moteur à combustion interne (4) en marche et le véhicule (1) à l'arrêt ;
sélectionner et accoupler un certain nombre de fois, durant la première étape d'auto-étalonnage, tous les engrenages de la boîte de vitesse (9) en utilisant la première servocommande (18, 19) et sans intervention du conducteur pour déterminer les positions réelles d'accouplement et de sélection des engrenages dans la boîte de vitesse (9) ;
désolidariser et accoupler, pendant la première étape d'auto-étalonnage, l'embrayage (6) avec la boîte de vitesse (9) au point mort en utilisant la deuxième servocommande (20) et sans intervention du conducteur pour déterminer un point de début d'accouplement de l'embrayage (6) ; et
transmettre au conducteur, à la fin de la première étape d'auto-étalonnage, un signal de fin de la première étape d'auto-étalonnage.

2. Procédé de commande selon la revendication 1 et comprenant les étapes supplémentaires consistant à :
transmettre au conducteur, à la fin de la première étape d'auto-étalonnage, un signal de démarrage d'une deuxième étape d'auto-étalonnage, durant laquelle le conducteur doit faire effectuer au véhicule (1) un tour d'essai qui comprend une série de démarrages à partir de l'état arrêté ;
déterminer, durant la deuxième étape d'auto-étalonnage, le point de début d'accouplement de l'embrayage (6) et un point d'accouplement de l'embrayage (6) ; et
transmettre au conducteur, à la fin de la deuxième étape d'auto-étalonnage, un signal de fin de la deuxième étape d' auto-étalonnage.

3. Procédé de commande selon la revendication 2, dans lequel, pendant le démarrage à partir d'un état arrêté de la deuxième étape d'auto-étalonnage, le comportement de la fonction de transmissibilité de l'embrayage (6) entre le point de début d'accouplement et le point d'accouplement est estimé.

4. Procédé de commande selon la revendication 1, 2 ou 3 et comprenant l'étape supplémentaire consistant à actionner, durant la première étape d'auto-étalonnage, les servocommandes (18, 19, 20) un certain nombre de fois avant de déterminer la fonction de transmissibilité de l'embrayage (6) et/ou les positions réelles d'accouplement et de sélection des engrenages dans la boîte de vitesse (9).

5. Procédé de commande selon l'une quelconque des revendications 1 à 4, dans lequel, durant la première étape d'auto-étalonnage, le frein du véhicule (1) reste serré.

6. Procédé de commande selon la revendication 5, dans lequel le véhicule (1) comprend une servocommande de frein à main, actionnée par au moins une troisième servocommande ; durant la première étape d'auto-étalonnage, le frein du véhicule (1) reste serré en actionnant la servocommande de frein à main sans intervention du conducteur.

7. Procédé de commande selon la revendication 5, dans lequel le frein du véhicule (1) reste serré en actionnant un système de freinage du véhicule (1) sans intervention du conducteur.

8. Procédé de commande selon l'une quelconque des revendications 1 à 7, dans lequel les signaux sont transmis au conducteur, en commandant un équipement de contrôle du véhicule (1) placé sur un tableau de bord du véhicule (1) lui-même.

9. Procédé de commande selon l'une quelconque des revendications 1 à 8 et comprenant l'étape supplémentaire consistant à mettre à jour de manière cyclique, durant la durée de vie du véhicule (1), la fonction de transmissibilité de l'embrayage (6) et/ou les positions réelles d'accouplement et de sélection des engrenages dans la boîte de vitesse (9).

10. Procédé de commande selon l'une quelconque des revendications 1 à 8 et comprenant les étapes supplémentaires consistant à :
enregistrer les valeurs moyennes de comparaison attendues pour la fonction de transmissibilité de l'embrayage (6) et/ou les positions réelles d'accouplement et de sélection des engrenages dans la boîte de vitesse (9) ; et
comparer la fonction de transmissibilité de l'embrayage (6) et/ou les positions réelles d'accouplement et de sélection des engrenages dans la boîte de vitesse (9) déterminées pendant la première étape d'auto-étalonnage avec les valeurs moyennes de comparaison attendues pour vérifier si la différence entre la fonction de transmissibilité de l'embrayage (6) et/ou les positions réelles d'accouplement et de sélection des engrenages dans la boîte de vitesse (9) déterminées pendant la première étape d'auto-étalonnage ne sont pas trop différentes des valeurs moyennes de comparaison attendues.
